# EUROPÄISCHE PATENTSCHRIFT

(11) **EP 0 998 430 B1**
(45) Veröffentlichungstag und Bekanntmachung des Hinweises auf die Patenterteilung: **28.11.2001**
(21) Anmeldenummer: 99906211.0
(22) Anmeldetag: 28.01.1999
(51) Int. Cl.: C02F 3/28, C02F 3/30

(54) **VERFAHREN UND VORRICHTUNG ZUR BIOLOGISCHEN BEHANDLUNG EINES FLUIDS UNTER BIOGASGENERIERUNG**
METHOD AND DEVICE FOR THE BIOLOGICAL TREATMENT OF A FLUID WITH BIOGAS GENERATION
PROCEDE ET DISPOSITIF POUR LE TRAITEMENT BIOLOGIQUE D'UN FLUIDE AVEC PRODUCTION DE BIOGAZ

(30) Priorität: 02.02.1998 DE 19804007
(43) Veröffentlichungstag der Anmeldung: 10.05.2000
(73) Patentinhaber: Von Nordenskjöld, Reinhart, Dr.-Ing., D-85658 Egmating-Münster (DE)
(72) Erfinder: Von Nordenskjöld, Reinhart, Dr.-Ing., D-85658 Egmating-Münster (DE)
(74) Vertreter: von Füner, Alexander, Prof.h.c. Dr.
(86) Internationale Anmeldenummer: EP9900551
(87) Internationale Veröffentlichungsnummer: WO9938812

(56) Entgegenhaltungen:
- EP-A- 0 048 675
- EP-A- 0 213 691
- US-A- 4 100 023
- US-A- 4 429 043
- US-A- 5 525 229
- PATENT ABSTRACTS OF JAPAN vol. 008, no. 077 (C-218), 10. April 1984 & JP 59 000386 A (KUBOTA TEKKO KK), 5. Januar 1984

## Beschreibung

Die Erfindung betrifft ein Verfahren und eine Vorrichtung zur biologischen Behandlung eines organisch ausreichend belasteten Fluids, insbesondere Abwassers, unter anaeroben Bedingungen und unter Biogasgenerierung.

Abwasser ist die Bezeichnung für nach häuslichem, gewerblichem oder industriellem Gebrauch verändertes, insbesondere verunreinigtes, abfließendes und in die Kanalisation gelangendes Wasser.

Die biologische Behandlung von hochbelasteten Flüssigkeiten bzw. die Reinigung von Abwasser stellt auch eine Maßnahme zur Entfernung von organischen Schmutzstoffen aus Flüssigkeiten dar, die in diesen in gelöster, kolloidaler oder feindispergierter Form enthalten sind, durch mikrobielle Aktivität, d.h. aeroben und/oder anaeroben Abbau mit Gasentwicklung unter Aufbau neuer Zellsubstanz und Sorption an Bakterienflocken, biologischem Rasen oder Schlammgranulat.

Allgemein erfolgt die biologische Abwasserreinigung in Kläranlagen unter Ausnutzung der gleichen bzw. ähnlicher Vorgänge, die sich bei der biologischen Selbstreinigung in einem Fließgewässer abspielen, allerdings in technisch intensivierter Form. Ebenso findet auch der anaerobe Prozeß in der Natur z.B. am Boden flacher, stehender Gewässer statt.

Unter anaerobem Abbau versteht man die Umwandlung organischer Stoffe durch Mikroorganismen unter Sauerstoffausschluß. Beim anaeroben Abbau organischer Stoffe entsteht Biogas, d.h. ein Gasgemisch, das zu ungefähr 55 bis 75% aus Methan, zu ungefähr 24 bis 44% aus Kohlendioxid und in Spuren aus anderen Beimengungen besteht.

Verfahren zur biologischen Behandlung hochbelasteter Flüssigkeiten unter anaeroben Bedingungen setzen eine relativ hohe Spezifität der Flüssigkeiten voraus. Sie eignen sich unter anderem für hochbelastete Flüssigkeiten, insbesondere Abwässer, aus der Lebensmittelindustrie, der Landwirtschaft, der Mineralölindustrie sowie der Zellstoffherstellung. Sie erlauben also vielfach die Behandlung von "Konzentraten", ergeben aber in der Regel keine Vollreinigung bzw. vollständige Umwandlung.

Bekannt ist eine Anlage zur anaeroben Behandlung von Abwasser der Biothane Corporation (Firmenprospekt, 7/92), die aus einem abgeschlossenen Belebtschlammbecken besteht, in dem eine Gruppe von Abscheidern im oberen Bereich des Beckens angeordnet ist. Bei dieser Anlage wird Abwasser über im Beckenboden vorgesehene Einströmungsöffnungen in das Belebtschlammbecken eingeführt und das behandelte Abwasser über eine im oberen Bereich des Beckens vorgesehene Einrichtung abgeführt. Diese Anlage hat u.a. den Nachteil, daß Reaktions- und Nachklärbereich räumlich voneinander nicht getrennt sind und sich negativ beeinflussen können. Aus diesem Grund kann auch die Aktivität des Belebtschlamms über die Zeit stark abnehmen, und es können auch Schwierigkeiten bei der Trennung von Schlamm und Flüssigkeit eintreten.

Bekannt ist ferner eine Anlage zur anaeroben Behandlung von Abwasser der ADI Systems Inc. (Firmenprospekt, AS 043/11-94), die aus einem einfachen, nach oben durch eine Folie abgeschlossenen Reaktionsbecken besteht. In diesem Reaktionsbecken sind ein primärer Reaktionsbereich, in dessen Schlammbett von unten Abwasser eingeführt wird, ein sekundärer Reaktionsbereich und ein Nachklärbereich angeordnet. Zwischen primärem und sekundärem Reaktionsbereich ist eine Tauchwand angeordnet, die sich vom Boden des Reaktionsbeckens aus erstreckt. Die Höhe der Tauchwand beträgt ungefähr 3/5 der Höhe des Reaktionsbeckens. Zwischen sekundärem Reaktionsbereich und Nachklärbereich sind ebenfalls Tauchwände angeordnet, die sich von der Oberfläche des Abwassers aus bodenwärts erstrecken. Die Höhe dieser Tauchwände beträgt ungefähr 1/3 der Höhe des Reaktionsbeckens. Ferner ist im unteren Bereich des Nachklärbereichs eine Abfuhreinrichtung zur Rückführung von Schlamm in den primären Reaktionsbereich vorgesehen. Ein Nachteil dieser Anlage besteht darin, daß insbesondere der sekundäre Reaktionsbereich vom Nachklärbereich räumlich nicht hinreichend abgegrenzt ist, wodurch die Aktivität des Schlamms im sekundären Reaktionsbereich über die Zeit deutlich abnehmen kann. Auch nimmt das in dieser Anlage durchgeführte Verfahren nicht auf die unterschiedlichen biologischen Verhältnisse der beiden Reaktionsbereiche Rücksicht. Ein weiterer Nachteil dieses Verfahrens besteht darin, daß der Schlamm im zweiten Reaktionsbereich nur wenig genutzt am Boden liegt.

Die US-4 100 023 beschreibt ein Verfahren zur Erzeugung von Methangas und Flüssigdünger aus organischem Material, bei dem eine Aufschlämmung aus aeroben und anaeroben Bakterien enthaltendem organischem Abfall in einem Mischbecken vermischt wird und wobei hintereinander angeordnete erste, zweite und dritte Kammern vorgesehen sind, die durch Durchlaßrohre derart miteinander verbunden sind, daß eine Verbindung vom mittleren Höhenbereich der ersten Kammer mit dem Bodenbereich der zweiten Kammer und eine Verbindung vom Bodenbereich der zweiten Kammer mit dem Bodenbereich der dritten Kammer besteht, und die zweite Kammer größer ist als sowohl die erste als auch die dritte Kammer, und wobei eine die erste, zweite und dritte Kammer überdeckende dehnbare Gassammelkammer vorgesehen ist. Gemäß diesem Verfahren werden zunächst die erste, zweite und dritte Kammer mit der Aufschlämmung aus dem Mischbecken bis zur Höhe einer durch das obere Ende eines vertikalen Rohrs gebildeten Auslaßöffnung in der dritten Kammer angefüllt, und anschließend erfolgt die regelmäßige Zufuhr einer bestimmten Menge an Aufschlämmung, die kleiner ist als das Volumen der ersten Kammer, vom Mischbecken in den Bodenbereich der ersten Kammer, so daß automatisch eine gleichgroße Menge an Aufschlämmung von der ersten Kammer zur zweiten Kammer, von der zweiten Kammer zur dritten Kammer und von der dritten Kammer zur Austrittsdffnung transportiert wird. Die erste Kammer ist dabei ausreichend groß, um die Menge der aus dem Mischbecken kommenden Aufschlämmung so lange zurückzuhalten, damit diese mit aeroben und anaeroben Bakterien reagiert und ein gesäuertes Material ergibt, und die zweite Kammer ist groß genug, um die Menge der aus der ersten Kammer kommenden Aufschlämmung so lange zurückzuhalten, damit diese weiter mit anaeroben Bakterien reagiert, um Methangas zu erzeugen. Der von der zweiten Kammer in die dritte Kammer kommende und durch die Auslaßöffnung abfließende Faulschlamm stellt einen Flüssigdünger dar, und in der zweiten Kammer wird die Aufschlämmung so lange gehalten, um Methangas zu erhalten, das in der vierten Kammer gesammelt wird. In der US-4 100 023 wird außerdem eine Vorrichtung zur Durchführung dieses Verfahrens beschrieben.

Der Erfindung lag die Aufgabe zugrunde, ein Verfahren bzw. eine Vorrichtung zur biologischen Behandlung eines organisch ausreichend belasteten Fluids unter Biogasgenerierung bereitzustellen, die einen verbesserten Reinigungsgrad bzw. Abbau, eine verbesserte Methangasausbeute, eine wesentlich günstigere Investition und einen sicheren Betrieb gewährleisten.

Diese Aufgabe wird durch das Verfahren mit den Merkmalen des Patentanspruchs 1 bzw. durch die Vorrichtung zur Durchführung dieses Verfahrens nach Patentanspruch 11 gelöst.

Die Unteransprüche betreffen bevorzugte Ausführungsformen des Verfahrens von Patentanspruch 1 bzw. der Vorrichtung von Patentanspruch 11.

Die Vorteile der Erfindung bestehen darin, daß die erfindungsgemäße Vorrichtung aufgrund ihrer kompakten Bauweise mit integriertem Gasspeicher zu einer erheblichen Platz- und Kostenersparnis (u.a. aufgrund von Einsparungen an Isoliermaterial) führt und darüberhinaus erdbebensicher und unabhängig von Setzungen ist.

Im Sinne der vorliegenden Erfindung werden unter organisch ausreichend belasteten Fluiden Flüssigkeiten wie Blut, Gülle und bevorzugt Abwässer verstanden, die beispielsweise folgende Parameter aufweisen: > ca. 2000 mg BSB₅/l (bei kühlerem Klima) und > ca. 500 mg BSB₅/l (bei warmem Klima).

Ein Ausführungsbeispiel der Erfindung wird nachstehend anhand von Zeichnungen näher erläutert. Es zeigt:
Fig. 1 eine schematische Draufsicht einer Vorrichtung zur biologischen Behandlung von Abwasser.
Fig. 2 eine Schnittdarstellung der Vorrichtung zur biologischen Behandlung von Abwasser gemäß Fig. 1.

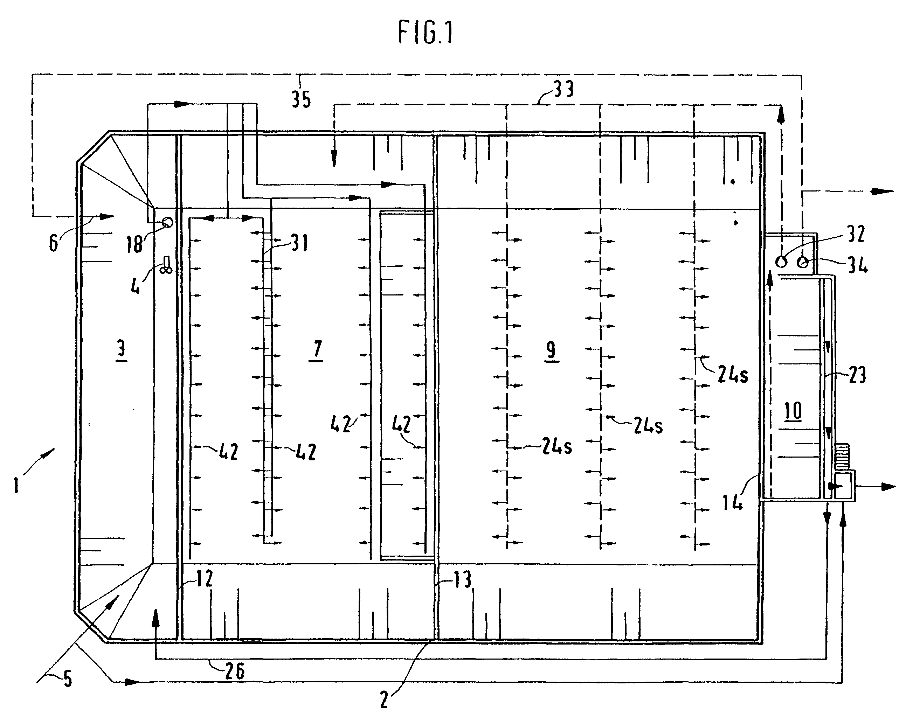

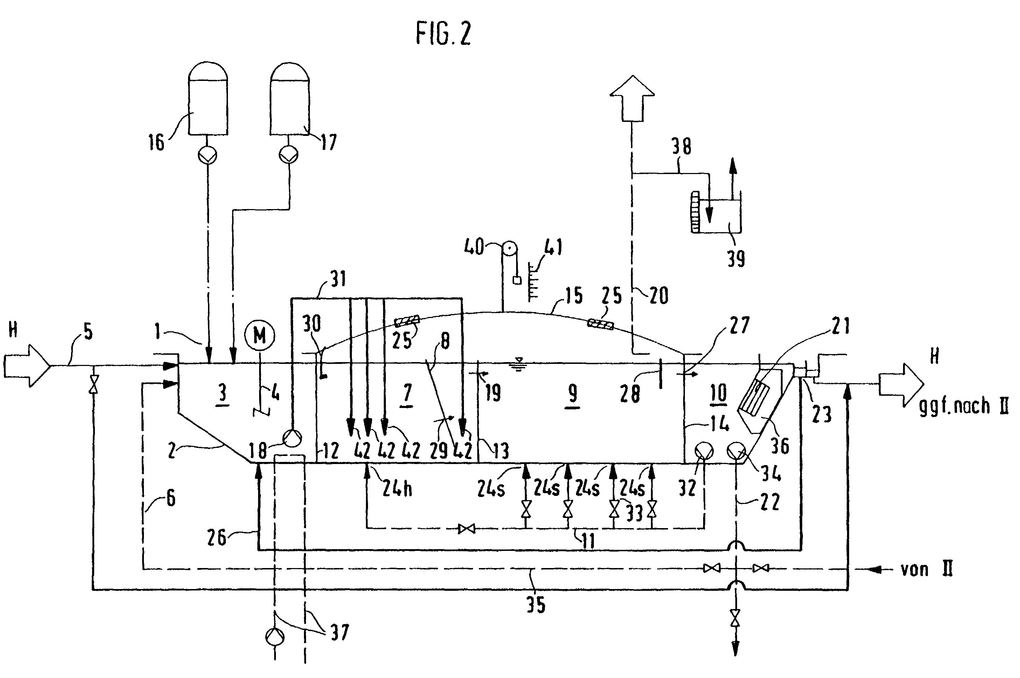

Die in Fig. 1 und 2 dargestellte Vorrichtung 1 zur biologischen Behandlung von Abwasser besteht aus einem Becken 2, in dem ein Misch- und Säuerungsbereich 3, ein Hochlastbereich 7, ein Schwachlastbereich 9 und ein Nachklärbereich 10 in Hauptströmungsrichtung H des Wassers hintereinander angeordnet sind.

Die Abmessungen des Beckens 2 sind im weiten Bereich variabel und werden von den individuellen Eigenschaften des zugeführten Abwassers bestimmt. Die Länge des Beckens 2 kann z.B. zwischen 50 und 200 m und die Breite zwischen 20 und 100 m betragen. Die Becken können z.B. ca. 3 bis 6 m tief sein.

Die Volumina der einzelnen Bereiche sind variabel und können durch geeignete veränderliche Positionierung der Trennwände 12, 13 und 14 an den Behandlungsprozeß angepaßt werden. Im Extremfall kann der Schwachlastbereich 9 stark reduziert werden, so daß er in den Teil des Nachklärbereichs 10 verlagert werden kann. Die Volumina der einzelnen Bereiche können z.B. für Brauereiwasser 285 m³ (Misch- und Säuerungsbereich 3), 890 m³ (Hochlastbereich 7), 1480 m³ (Schwachlastbereich 9) und 120 m³ (Nachklärbereich 10) betragen.

Das Becken 2 ist bevorzugt in das Erdreich eingelassen und im wesentlichen in Erdbauweise errichtet. Der Boden und die Seitenwände des Beckens 2 können mit Dichtungsbahnen, z.B. aus HDPE, abgedichtet sein.

Das Abwasser gelangt über die Zufuhreinrichtung 5 zunächst in den Misch- und Säuerungsbereich 3. In diesem Bereich wird neben der Temperatur auch (einfach oder zweifach) der pH-Wert des Abwassers gemessen, wobei der pH-Wert gegebenenfalls durch Zugaben über die Vorrichtung 16 ausgeglichen wird. Sofern erforderlich kann dem Abwasser in dem (oder im Anschluß an den) Misch- und Säuerungsbereich 3 zur Schwefelbindung eine Eisen-Verbindung, z.B. ein Eisen(III)-Salz wie FeClSO₄, über die Beschickungseinrichtung 17 zugegeben werden. Ferner kann das Abwasser im Misch- und Säuerungsbereich 3 mit Hilfe eines Rührwerks 4 gemischt werden. Auch kann zurückgeführter Belebtschlamm über die Zufuhreinrichtung 6 in den Misch- und Säuerungsbereich 3 geführt werden. Aufgrund mikrobieller Aktivität werden im Misch- und Säuerungsbereich 3 die organischen Inhaltsstoffe des Abwassers unter nicht unbedingt rein anaeroben Bedingungen verändert, insbesondere versäuert. Andererseits können im Misch- und Säuerungsbereich 3 Einrichtungen zur Belüftung und Umwälzung des Abwassers mit Luft oder Sauerstoff (nicht gezeigt) vorgesehen sein, um regelnd einzugreifen.

Am Boden des Misch- und Säuerungsbereichs 3 sind bevozugt auslaufseitig mindestens eine Dosierpumpe 18 mit Leitungen 31 vorgesehen, deren düsenartige Auslaßöffnungen 42 im Hochlastbereich 7 münden. Mit Hilfe dieser Pumpe oder Pumpen wird insbesondere als Funktion der Größe des Hochlastbereichs 7 unterschiedlich viel Gemisch z.B. ungefähr 40 bis 60 l Abwasser pro Sekunde in den Bodenbereich des Hochlastbereichs 7 in Wirbelform geordnet und unter Druck zugefördert. Es kann auch eine Wechselschaltung der Leitungen 31 zur Anwendung kommen, insbesondere wenn hohe organische Belastungswerte vorliegen, aber vor allem um Pumpenenergie zu sparen.

Die methanogene Phase des anaeroben Abbauprozesses der organischen Inhaltsstoffe des Abwassers findet in dem Hochlastbereich 7 (Raumbelastung: ungefähr 25 bis 40 kg CSB/m³_{BV} x d) und dem Schwachlastbereich 9 (Raumbelastung: ungefähr zwischen 2 bis 7 kg CSB/m³_{BV} x d) statt. Beide Bereiche stellen sozusagen jeweils ein Belebtschlammbett (eine spezifische Biozönose) dar. Die Verwendung von zwei unabhängigen und unterschiedlichen Bakterienstämmen (Biozönosen) führt unter anderem zu einer verbesserten Methangasausbeute. Die Belebtschlammbetten werden für den Hochlastbereich 7 alternativ oder zusätzlich zur Bedüsung 42 jeweils durch Einspritzen von (in variabler Form) Wasser, Wasserschlammgemisch bzw. Rücklaufschlamm, wobei letzterer über die Abfuhreinrichtung 11 (bestehend aus mindestens einer Pumpe 32 und dem Leitungssystem 33) aus dem Nachklärbereich 10 geleitet werden kann, durch Strahldüsen 24h bzw. 24s, die am Boden des Hochlastbereichs 7 bzw. am Boden des Schwachlastbereichs 9 vorgesehen sind, umgewälzt. Zur weiteren Unterstützung der Umwälzung können im Hochlastbereich 7 und im Schwachlastbereich 9 Einblaseinrichtungen (nicht gezeigt), z.B. Begasungsketten für klima- bzw. temperaturabhängig erwärmtes Biogas, oder Rührwerke angeordnet sein. Die Einblaseinrichtungen werden mit Biogas gespeist, das dem sich über den Hochlastbereich 7 und den Schwachlastbereich 9 erstreckenden Gasspeicher entnommen und gegebenenfalls in einem Gaserwärmer (nicht gezeigt) erwärmt wird.

Im hinsichtlich der Hauptströmungsrichtung H stromabwärtigen Bereich des Hochlastbereichs 7 ist zur Rückumwälzung von Belebtschlamm bzw. Schlammgranulat eine Tauchwand 8 mit in mittlerer Höhe angeordneten Zulauföffnungen 29 vorgesehen, die sich von der Oberfläche bis fast zum Boden des Hochlastbereichs 7 erstreckt, wobei der Abstand zwischen der Tauchwand 8 und der Trennwand 13 bodenwärts kontinuierlich abnimmt. Spezielle Einblasdüsen im Bodenbereich sowie die allgemein im Umwälzbereich höhere Bewegungsenergie (nicht gezeigt) sichern die Rückumwälzung. Spezielle Einrichtungen (nicht gezeigt), z.B. Paddelwerke, können zur Auflösung von Verstopfungen in der Nähe des Bodens im Längsbereich zwischen der Tauchwand 8 und der Trennwand 13 im Bodenbereich angeordnet werden.

Das noch teilbelastete Abwasser gelangt nun über die im oberen Bereich der Trennwand 13 vorgesehenen Auslauföffnungen 19 in den Schwachlastbereich 9. Sofern das Abwasser schwer abbaubare Komponenten enthält oder zusätzlich Aufschlußeffekte gewünscht werden, kann die Verweilzeit des Abwassers in dem Schwachlastbereich 9 deutlich über der Verweilzeit im Hochlastbereich 7 liegen. Solche Effekte werden auch durch die hier mehr auf die Weiter- und Endreinigung eingestellte Biozönose erreicht. Gleichzeitig wird ein weiterer Aufschluß erreicht, der die nachfolgende zumeist aerobe Endreinigung erleichtert.

Die Aufteilung in Hochlast- und Schwachlastbereich besitzt im übrigen auch den Vorteil, daß eine gute Nachklärung nach einem Schwachlastbereich immer leichter und effizienter möglich ist. Die großen Vorteile einer guten Nachklärung sind dem Fachmann geläufig.

In bestimmten Fällen ist es vorteilhaft den Hochlastbereich 7 teilweise oder ganz (kontinuierlich oder im Wechsel) mit Hilfe einer vorgesehenen Umgehungsleitung (hier nicht gezeigt) zu umfahren und das Abwasser direkt in den Schwachlastbereich 9 einzuleiten.

Über den Hochlastbereich 7 und den Schwachlastbereich 9 erstreckt sich die den Gasspeicher ausbildende Folie 15, an deren Rändern umlaufend mit Gewichten versehene Eintauchlappen 30 zur einwandfreien Gasabdichtung vorgesehen sind. Die Folie 15 ist in der Regel UV-stabil und ist mit variablen Gewichten 25 ausgestattet, um den Druck im Inneren des Gasspeichers konstant zu halten. Werden diese Gewichte als mit Wasser beliebig füllbare Kammern ausgebildet, so läßt sich der Druck im Inneren des Gasspeichers einregeln. In kühleren Klimabereichen wird die Folie 15 und/oder das gesamte Becken 2 in wärmeisolierter Form ausgeführt.

Im Gasspeicher ist eine Einrichtung 20 zur Entnahme von Biogas vorgesehen, über die das gewonnene Biogas für Eigen- und Fremdheizzwecke, zur Brauchwassererwärmung, zur Kraft- und Stromerzeugung und andere Verwendungszwecke eingesetzt wird.

Der Gasblase 15 kann als Sicherheitsdruckbegrenzer über die Leitung 38 ein höhenverstellbarer Einblastopf 39 zugeordnet werden. Ferner kann zur Füllanzeige an die Gasblase 15 mechanisch befestigt ein Umlaufseil 40 mit Skalenanzeige 41 zugeordnet sein.

Um einen 100%ig geruchsfreien Betrieb der erfindungsgemäßen Vorrichtung zu gewährleisten oder einen Wärmeisoliereffekt zu erreichen, kann auch der Misch- und Säuerungsbereich 3 und der Nachklärbereich 10 mit einer gasdichten Folie (ggf. wärmeisoliert) abgedeckt werden.

Das Abwasser gelangt nun vom Schwachlastbereich 9 über die im oberen Bereich der Trennwand 14 (vor der im Abstand und parallel die Tauchwand 28 angeordnet ist) vorgesehenen Auslauföffnungen 27 in den Nachklärbereich 10. Aufgrund der Trennung von Schwachlastbereich 9 und Nachklärbereich 10 durch die Trennwand 14 und insbesondere bei größeren Wassermengen durch Einbauten im Nachklärbereich 10 wird ein schlammfreier Ablauf des geklärten Abwassers aus dem Nachklärbereich 10 und ein erheblich verminderter bzw. beseitigter Schlammabtrieb gewährleistet.

Im Nachklärbereich 10 ist an der zur Hauptströmungsrichtung H querverlaufenden, schrägen Seitenwand 36 des Beckens ein die Klärung unterstützender Lamellenabscheider 21 in unmittelbarer Nähe der Auslaufeinrichtung 23 für das geklärte Abwasser, die als Überlaufeinrichtung, z.B. als Überlaufbehälter, ausgebildet ist, vorgesehen.

Für einen kontinuierlichen Betrieb der Vorrichtung ist es notwendig, bereits behandeltes Abwasser aus der Auslaufeinrichtung 23 abzuzweigen und über die Zufuhreinrichtung 26 bevorzugt in den Ablaufbereich des Misch- und Säuerungsbereichs 3 einzuführen, wenn über die Zufuhreinrichtung 5 nicht genügend frisches Abwasser zugeführt werden kann. Dies erfolgt in der Regel automatisch aufgrund entsprechender Höhengestaltung. Ferner kann geklärtes Abwasser aus der Auslaufeinrichtung 23 und über die Zufuhreinrichtung 5 in den Misch- und Säuerungsbereich 3 zur Verdünnung von frischem Abwasser eingeleitet werden, sofern das frische Abwasser z.B. eine zu hohe Konzentration an Giftstoffen enthält. Über dieselben Rücklaufeinrichtungen kann der Ablauf (hier nicht gezeigt) zum Zwecke des Wärmeaustauschs bzw. zur Vermeidung unnötiger Wärmeverluste mit dem Misch- und Säuerungsbereich 3 oder der Zufuhreinrichtung 5 in Wärmeaustausch gebracht werden.

Überschußschlamm kann aus dem Nachklärbereich 10 über die Abfuhreinrichtung 22, die aus einer am Boden des Nachklärbereichs 10 vorgesehenen Pumpe 34 und dem Leitungssystem 35 besteht, in ein Schlammpolderbecken (nicht gezeigt) oder über die Abfuhreinrichtung 22 und die Zufuhreinrichtung 6 in den Misch- und Säuerungsbereich 3 geführt werden.

Der Reinigungsgrad der erfindungsgemäßen Vorrichtung liegt zwischen 80 und 90%. Er kann jedoch aufgrund der beiden unterschiedlichen Biozönosen oft auch bei über 90% liegen. Zur Vervollständigung der Reinigung kann das Abwasser über die Auslaufeinrichtung 23 in eine nachfolgende ggf. fest angefügte Vorrichtung II zur aeroben Reinigung von Abwasser, die einen Belebungsbereich, einen Zwischenklärbereich, einen Nachbelüftungsbereich und einen Nachsedimentationsbereich, oder nur die beiden ersten Bereiche umfassen kann, geleitet werden. Der Reinigungsgrad beträgt bei einer derartigen Kombination von anaerober und aerober Reinigung ungefähr 99,5%. Bevorzugt wird der Überschußschlamm aus dem Nachklärbereich der Vorrichtung II zur aeroben Reinigung von Abwasser über die Zufuhreinrichtung 6 oder 26 in den Misch- und Säuerungsbereich 3 geleitet, um die Überschußschlammbilanz zu optimieren.

Für einen Betrieb in kälteren Klimazonen können der Misch- und Säuerungsbereich 3, der Hochlastbereich 7, der Schwachlastbereich 9 und gegebenenfalls der Nachklärbereich 10 wärmeisoliert und zusätzlich wahlweise der Misch- und Säuerungsbereich 3, der Hochlastbereich 7 und der Schwachlastbereich 9 mit Heizeinrichtungen wie 37, z.B. mit Warmwasser, ausgestattet werden.

## Patentansprüche

1. Verfahren zur biologischen Behandlung eines organisch ausreichend belasteten Fluids, das in einem Becken durchgeführt wird, wobei das Fluid
- zunächst einer Misch- und Säuerungsstufe (A) unterworfen wird, anschließend
- in einer Hochlaststufe (B) mit Rückumwälzung des Belebtschlamms und dann in einer Schwachlaststufe (C) einem anaeroben Abbau unter Methanogenese unterworfen wird, und anschließend
- in einer Nachklärstufe (D), aus der auch eine Schlammrückführung durchgeführt werden kann, geklärt wird,
wobei das in der Hochlaststufe (B) und der Schwachlaststufe (C) entstehende Biogas aufgefangen wird.

2. Verfahren nach Anspruch 1, **dadurch gekennzeichnet, daß** das Fluid ein Abwasser ist.

3. Verfahren nach Anspruch 2, **dadurch gekennzeichnet, daß** das Abwasser in der Misch- und Säuerungsstufe (A) gerührt wird.

4. Verfahren nach Anspruch 2 oder 3, **dadurch gekennzeichnet, daß** das Abwasser in der Misch- und Säuerungsstufe (A) mit zurückgeführtem Belebtschlamm gemischt wird.

5. Verfahren nach einem der Ansprüche 2 bis 4, **dadurch gekennzeichnet, daß** in der Misch- und Säuerungsstufe (A) der pH-Wert des Abwassers justiert wird.

6. Verfahren nach einem der Ansprüche 2 bis 5, **dadurch gekennzeichnet, daß** das Abwasser in der Misch- und Säuerungsstufe (A) mit einer Eisen-Verbindung versetzt wird.

7. Verfahren nach einem der Ansprüche 2 bis 6, **dadurch gekennzeichnet, daß** in der Nachklärstufe (D) abgesetzter Schlamm in die Hochlaststufe (B) und/oder die Schwachlaststufe (C) zurückgeführt wird.

8. Verfahren nach einem der Ansprüche 2 bis 7, **dadurch gekennzeichnet, daß** das Abwasser nach Durchlauf der Stufen (A) bis (D) zumindest teilweise in die Misch- und Säuerungsstufe (A) zurückgeführt wird.

9. Verfahren nach einem der Ansprüche 2 bis 8, **dadurch gekennzeichnet, daß** das Abwasser nach Durchlauf der Stufen (A) bis (D) zusätzlich unter aeroben Bedingungen gereinigt wird.

10. Verfahren nach Anspruch 9, **dadurch gekennzeichnet, daß** die aerobe Reinigung eine Belebungsstufe, eine Zwischenklärungsstufe, eine Nachbelüftungsstufe und eine Nachsedimentationsstufe umfaßt.

11. Vorrichtung zur biologischen Behandlung eines organisch ausreichend belasteten Fluids, insbesondere Abwassers, bestehend aus
- einem Becken (2), in dem
- ein Misch- und Säuerungsbereich (3), an den eine Zufuhreinrichtung (5) für das Fluid angeschlossen ist,
- ein Hochlastbereich (7) zum anaeroben Abbau des Fluids unter Methanogenese, der mit einer Einrichtung (8) zur Rückumwälzung von Belebtschlamm ausgestattet ist,
- ein Schwachlastbereich (9) zum weiteren anaeroben Abbau des Fluids unter Methanogenese, und
- ein Nachklärbereich (10), der mit mindestens einer Abfuhreinrichtung (11) zur Schlammrückführung ausgestattet ist,
in Hauptströmungsrichtung des Fluids hintereinander angeordnet sind, wobei Misch- und Säuerungsbereich (3), Hochlastbereich (7), Schwachlastbereich (9) und Nachklärbereich (10) durch die Trennwände (12), (13) und (14) voneinander abgetrennt sind, und
- einer gasdichten Folie (15), die sich über den Hochlastbereich (7) und den Schwachlastbereich (9) erstreckt und einen Gasspeicher ausbildet.

12. Vorrichtung nach Anspruch 11, **dadurch gekennzeichnet, daß** der Misch- und Säuerungsbereich (3) mit einem Rührwerk (4) ausgestattet ist.

13. Vorrichtung nach Anspruch 11 oder 12, **dadurch gekennzeichnet, daß** der Misch- und Säuerungsbereich (3) an eine Zufuhreinrichtung (6) für Rücklaufbelebtschlamm angeschlossen ist.

14. Vorrichtung nach einem der Ansprüche 11 bis 13, **dadurch gekennzeichnet, daß** der Misch- und Säuerungsbereich (3) mit einer Vorrichtung (16) zum Justieren des pH-Werts in Verbindung steht.

15. Vorrichtung nach einem der Ansprüche 11 bis 14, **dadurch gekennzeichnet, daß** der Misch- und Säuerungsbereich (3) mit einer Beschickungseinrichtung (17) für eine Eisen-Verbindung in Verbindung steht.

16. Vorrichtung nach einem der Ansprüche 11 bis 15, **dadurch gekennzeichnet, daß** im Misch- und Säuerungsbereich (3) mindestens eine Dosierpumpe (18) vorgesehen ist, deren Einlaß mit dem Misch- und Säuerungsbereich (3) und deren Auslaß mit dem Hochlastbereich (7) in Verbindung steht.

17. Vorrichtung nach einem der Ansprüche 11 bis 16, **dadurch gekennzeichnet, daß** die Einrichtung (8) zur Rückumwälzung von Schlamm als Tauchwand ausgebildet ist.

18. Vorrichtung nach einem der Ansprüche 11 bis 17, **dadurch gekennzeichnet, daß** der Hochlastbereich (7) mit der oder den Abfuhreinrichtungen (11) zur Schlammrückführung in Verbindung steht.

19. Vorrichtung nach einem der Ansprüche 11 bis 18, **dadurch gekennzeichnet, daß** in dem Hochlastbereich (7) mindestens eine Einblaseinrichtung für ggf. erwärmtes Biogas angeordnet ist.

20. Vorrichtung nach einem der Ansprüche 11 bis 19, **dadurch gekennzeichnet, daß** die Trennwand (13) im oberen Bereich Auslauföffnungen (19) aufweist.

21. Vorrichtung nach einem der Ansprüche 11 bis 20, **dadurch gekennzeichnet, daß** der Schwachlastbereich (9) mit der oder den Abfuhreinrichtungen (11) zur Schlammrückführung in Verbindung steht.

22. Vorrichtung nach einem der Ansprüche 11 bis 21, **dadurch gekennzeichnet, daß** in dem Schwachlastbereich (9) mindestens eine Einblaseinrichtung für ggf. erwärmtes Biogas angeordnet ist.

23. Vorrichtung nach einem der Ansprüche 11 bis 22, **dadurch gekennzeichnet, daß** der Nachklärbereich (10) mit einem Lamellenabscheider (21) ausgestattet ist.

24. Vorrichtung nach einem der Ansprüche 11 bis 23, **dadurch gekennzeichnet, daß** der Nachklärbereich (10) mit mindestens einer Abfuhreinrichtung (22) für Überschußschlamm in Verbindung steht.

25. Vorrichtung nach einem der Ansprüche 11 bis 24, **dadurch gekennzeichnet, daß** an den Nachklärbereich (10) eine Auslaufeinrichtung (23) für Abwasser angeschlossen ist.

26. Vorrichtung nach einem der Ansprüche 11 bis 25, **dadurch gekennzeichnet, daß** das Becken (2) in das Erdreich eingelassen ist.

## Claims

1. Method for biological treatment of a fluid with a considerable organic load, which is carried out in a tank, wherein the fluid
- is first subjected to a mixing and acidification step (A), then
- subjected, in a high-load phase (B) with recirculation of the activated sludge and then in a low-load step (C), to anaerobic breakdown under methanogenesis, and then
- clarified in a subsequent clarification step (D), from which recirculation of sludge can also be carried out,
wherein the biogas produced in the high-load step (B) and the low-load step (C) is collected.

2. Method according to claim 1, **characterised in that** the fluid is waste water.

3. Method according to claim 2, **characterised in that** the waste water is agitated in the mixing and acidification step (A).

4. Method according to claim 2 or 3, **characterised in that** in the mixing and acidification step (A) the waste water is mixed with recirculated activated sludge.

5. Method according to any one of claims 2 to 4, **characterised in that** the pH value of the waste water is adjusted in the mixing and acidification step (A).

6. Method according to any one of claims 2 to 5, **characterised in that** the waste water is mixed with an iron compound in the mixing and acidification step (A).

7. Method according to any one of claims 2 to 6, **characterised in that** in the subsequent clarification step (D) deposited sludge is recirculated into the high-load step (B) and/or the low-load step (C).

8. Method according to any one of claims 2 to 7, **characterised in that** after passing through the steps (A) to (D) the waste water is recirculated at least partially into the mixing and acidification step (A).

9. Method according to any one of claims 2 to 8, **characterised in that** after passing through steps (A) to (D) the waste water is additionally cleaned under aerobic conditions.

10. Method according to claim 9, **characterised in that** the aerobic cleaning includes an activated sludge step, an intermediate clarification step, a subsequent aeration step and a subsequent sedimentation step.

11. Apparatus for biological treatment of a fluid with a considerable organic load, in particular waste water, consisting
- of a tank (2) in which
- a mixing and acidification region (3), to which a supply device (5) for the fluid is connected,
- a high-load region (7) for anaerobic breakdown of the fluid under methanogenesis, which is provided with a device (8) for recirculation of activated sludge,
- a low-load region (9) for further anaerobic breakdown of the fluid under methanogenesis, and
- a subsequent clarification region (10), which is provided with at least one draw-off device (11) for recirculation of sludge,
are disposed in succession in the main flow direction of the fluid, wherein the mixing and acidification region (3), high-load region (7), low-load region (9) and subsequent clarification region (10) are separated from each other by the separating walls (12), (13) and (14), and
- of a gas-tight sheet (15) which extends over the high-load region (7) and the low-load region (9) and forms a gas reservoir.

12. Apparatus according to claim 11, **characterised in that** the mixing and acidification region (3) is provided with an agitation device (4).

13. Apparatus according to claim 11 or claim 12, **characterised in that** the mixing and acidification region (3) is connected to a supply device (6) for recirculated activated sludge.

14. Apparatus according to any one of claims 11 to 13, **characterised in that** the mixing and acidification region (3) is connected to a device (16) for adjusting the pH value.

15. Apparatus according to any one of claims 11 to 14, **characterised in that** the mixing and acidification region (3) is connected to a loading device (17) for an iron compound.

16. Apparatus according to any one of claims 11 to 15, **characterised in that** in the mixing and acidification region (3) at least one metering pump (18) is provided, the inlet of which is connected to the mixing and acidification region (3) and the outlet of which is connected to the high-load region (7).

17. Apparatus according to any one of claims 11 to 16, **characterised in that** the device (8) for recirculation of sludge is formed as an immersion wall.

18. Apparatus according to any one of claims 11 to 17, **characterised in that** the high-load region (7) is connected to the draw-off device(s) (11) for sludge recirculation.

19. Apparatus according to any one of claims 11 to 18, **characterised in that** in the high-load region (7) at least one blow-in device is disposed for possibly-heated biogas.

20. Apparatus according to one of claims 11 to 19, **characterised in that** the separating wall (13) comprises outlet orifices (19) in the upper region.

21. Apparatus according to any one of claims 11 to 20, **characterised in that** the low-load region (9) is connected to the draw-off device(s) (11) for sludge recirculation.

22. Apparatus according to any one of claims 11 to 21, **characterised in that** in the low-load region (9) at least one blow-in device is disposed for possibly-heated biogas.

23. Apparatus according to any one of claims 11 to 22, **characterised in that** the subsequent clarification region (10) is provided with a blade separator (21).

24. Apparatus according to any one of claims 11 to 23, **characterised in that** the subsequent clarification region (10) is connected to at least one draw-off device (22) for excess sludge.

25. Apparatus according to any one of claims 11 to 24, **characterised in that** an outlet device (23) for waste water is connected to the subsequent clarification region (10).

26. Apparatus according to any one of claims 11 to 25, **characterised in that** the tank (2) is let into the ground.

## Revendications

1. Procédé pour le traitement biologique d'un fluide suffisamment chargé en matières organiques, qui est exécuté dans un bassin, et dans lequel:
- le fluide est d'abord soumis à une étape de mélange et d'acidification (A), ensuite
- subit une décomposition anaérobie avec méthanogenèse dans un étage à forte charge (B) avec recyclage des boues activées et ensuite dans un étage à faible charge (C), et ensuite
- est clarifié dans un étage de clarification secondaire (D) dont les boues peuvent également être recyclées, et
le biogaz produit dans l'étage à forte charge (D) et dans l'étage à faible charge (C) étant récupéré.

2. Procédé selon la revendication 1, **caractérisé en ce que** le fluide est une eau usée.

3. Procédé selon la revendication 2, **caractérisé en ce que** dans l'étape de mélange et d'acidification (A), l'eau usée est brassée.

4. Procédé selon la revendication 2 ou 3, **caractérisé en ce que** dans l'étape de mélange et d'acidification (A), l'eau usée est mélangée avec des boues activées recyclées.

5. Procédé selon l'une des revendications 2 à 4, **caractérisé en ce que** dans l'étape de mélange et d'acidification (A), la valeur du pH de l'eau usée est ajustée.

6. Procédé selon l'une des revendications 2 à 5, **caractérisé en ce que** dans l'étape de mélange et d'acidification (A), l'eau usée est mélangée à un composé de fer.

7. Procédé selon l'une des revendications 2 à 6, **caractérisé en ce que** des boues déposées dans l'étape de clarification secondaire (D) sont renvoyées dans l'étape à forte charge (B) et/ou dans l'étape à faible charge (C).

8. Procédé selon l'une des revendications 2 à 7, **caractérisé en ce que** l'eau usée est renvoyée au moins en partie dans l'étape de mélange et d'acidification (A) après avoir traversé les étapes (A) à (D).

9. Procédé selon l'une des revendications 2 à 8, **caractérisé en ce que** l'eau usée est encore épurée en conditions aérobies après avoir traversé les étapes (A) à (D).

10. Procédé selon la revendication 9, **caractérisé en ce que** l'épuration aérobie comprend une étape d'activation, une étape de clarification intermédiaire, une étape d'aération finale et une étape de sédimentation finale.

11. Dispositif pour le traitement biologique d'un fluide suffisamment chargé en matière organique, en particulier d'eau usée, constitué :
- d'un bassin (2) dans lequel
- une zone de mélange et d'acidification (3) à laquelle se raccorde un dispositif (5) d'amenée du fluide,
- une zone à forte charge (7) pour la décomposition anaérobie du fluide avec méthanogenèse, qui est équipé d'un dispositif (8) de recyclage des boues activées,
- une zone à faible charge (9) pour la poursuite de la décomposition anaérobie du fluide avec méthanogenèse, et
- une zone de clarification secondaire (10) qui est équipée d'au moins un dispositif (11) d'évacuation pour le recyclage des boues,
sont disposées les unes à la suite des autres dans la direction principale d'écoulement du fluide, la zone de mélange et d'acidification (3), la zone à forte charge (7), la zone à faible charge (9) et la zone de clarification finale (10) étant séparées les unes des autres par les parois de séparation (12), (13), (14), et
- d'une feuille (15) étanche au gaz, qui s'étend au-dessus de la zone à forte charge (7) et de la zone à faible charge (9) et qui forme la réserve de gaz.

12. Dispositif selon la revendication 11, **caractérisé en ce que** la zone de mélange et d'acidification (3) est équipée d'un dispositif de brassage (4).

13. Dispositif selon la revendication 11 ou 12, **caractérisé en ce qu'**un dispositif (6) d'amenée de boues activées recyclées se raccorde à la zone de mélange et d'acidification (3).

14. Dispositif selon l'une des revendications 11 à 13, **caractérisé en ce que** la zone de mélange et d'acidification (3) communique avec un dispositif (16) d'ajustement de la valeur du pH.

15. Dispositif selon l'une des revendications 11 à 14, **caractérisé en ce que** la zone de mélange et d'acidification (3) communique avec un dispositif (17) d'alimentation en un composé de fer.

16. Dispositif selon l'une des revendications 11 à 15, **caractérisé en ce que** dans la zone de mélange et d'acidification (3) est prévue au moins une pompe de dosage (18) dont l'entrée communique avec la zone de mélange et d'acidification (3) et dont la sortie communique avec la zone à forte charge (7).

17. Dispositif selon l'une des revendications 11 à 16, **caractérisé en ce que** le dispositif (8) de recyclage des boues est configuré comme paroi immergée.

18. Dispositif selon l'une des revendications 11 à 17, **caractérisé en ce que** la zone à forte charge (7) communique avec le ou les dispositifs (11) d'évacuation pour le recyclage des boues.

19. Dispositif selon l'une des revendications 11 à 18, **caractérisé en ce qu'**au moins un dispositif de soufflage pour du biogaz éventuellement chauffé est disposé dans la zone à forte charge (7).

20. Dispositif selon l'une des revendications 11 à 19, **caractérisé en ce que** la paroi de séparation (13) présente des ouvertures d'évacuation (19) dans sa partie supérieure.

21. Dispositif selon l'une des revendications 11 à 20, **caractérisé en ce que** la zone à faible charge (9) communique avec le ou les dispositifs (11) d'évacuation pour le recyclage des boues.

22. Dispositif selon l'une des revendications 11 à 21, **caractérisé en ce qu'**au moins un dispositif de soufflage pour du biogaz éventuellement réchauffé est disposé dans la zone à faible charge (9).

23. Dispositif selon l'une des revendications 11 à 22, **caractérisé en ce que** la zone de clarification finale (10) est équipée d'un séparateur à lamelles (21).

24. Dispositif selon l'une des revendications 11 à 23, **caractérisé en ce que** la zone de clarification finale (10) communique avec au moins un dispositif d'évacuation (22) pour les boues en excès.

25. Dispositif selon l'une des revendications 11 à 24, **caractérisé en ce qu'**un dispositif (23) d'évacuation des eaux usées se raccorde à la zone de clarification finale (10).

26. Dispositif selon l'une des revendications 11 à 25, **caractérisé en ce que** le bassin (2) est creusé dans le sol.
